(19) Europäisches Patentamt
European Patent Office
Office européen des brevets

(11) EP 4 239 724 A1

(12) EUROPEAN PATENT APPLICATION
published in accordance with Art. 153(4) EPC

(43) Date of publication:
**06.09.2023 Bulletin 2023/36**

(21) Application number: **21886058.3**

(22) Date of filing: **21.10.2021**

(51) International Patent Classification (IPC):
***H01M 4/505** (2010.01)* ***H01M 4/525** (2010.01)*
***H01M 10/052** (2010.01)* ***H01M 10/0567** (2010.01)*

(52) Cooperative Patent Classification (CPC):
**H01M 4/505; H01M 4/525; H01M 10/052; H01M 10/0567;** Y02E 60/10

(86) International application number:
**PCT/JP2021/038948**

(87) International publication number:
**WO 2022/091939 (05.05.2022 Gazette 2022/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.10.2020 JP 2020181089**

(71) Applicant: **Panasonic Intellectual Property Management Co., Ltd.**
**Kadoma-shi, Osaka 571-0057 (JP)**

(72) Inventor: **ZHONG, Yuanlong**
**Kadoma-shi, Osaka 571-0057 JAPAN (JP)**

(74) Representative: **Novagraaf International SA**
**Chemin de l'Echo 3**
**1213 Onex, Geneva (CH)**

# (54) NONAQUEOUS ELECTROLYTE SECONDARY BATTERY

(57) A non-aqueous electrolyte secondary battery including a positive electrode, a negative electrode, and a non-aqueous electrolyte, in which the positive electrode includes a positive electrode active material, the positive electrode active material includes a lithium-transition metal composite oxide containing Ni, Mn, and Al, proportions of Ni, Mn, and Al in metal elements other than Li contained in the lithium-transition metal composite oxide are, respectively, Ni: 50 atm% or more, Mn: 10 atm% or less, and Al: 10 atm% or less, when the lithium-transition metal composite oxide contains Co, a content of Co in the metal elements other than Li is 1.5 atm% or less, and the non-aqueous electrolyte includes a fluorosulfonic acid salt.

*FIG. 1*

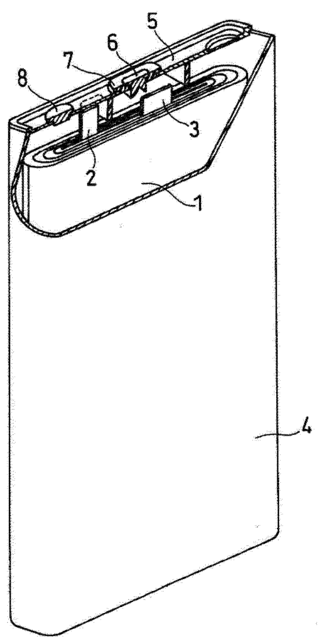


EP 4 239 724 A1

## Description

[Technical Field]

The present disclosure relates to a non-aqueous electrolyte secondary battery.

[Background Art]

A non-aqueous electrolyte secondary battery represented by a lithium ion secondary battery includes a positive electrode, a negative electrode, and a non-aqueous electrolyte. In order to ensure excellent characteristics of the non-aqueous electrolyte secondary battery, attempts have been made to improve the battery components.

Patent Literature 1 proposes a non-aqueous liquid electrolyte containing: a compound (A) having an organic group with 1 to 20 carbon atoms which may have a substituent on the nitrogen atom of isocyanuric acid; and a nitrile compound, an isocyanate compound, a difluorophosphoric acid compound, a fluorosulfonic acid salt, or the like.

Patent Literature 2 proposes a positive electrode active material for a non-aqueous liquid electrolyte secondary battery, comprising a lithium-containing composite oxide represented by a formula 1: $Li_xNi_{1-y-z-v-w}Co_yAl_zM^1_vM^2_wO_2$. The element $M^1$ in the formula 1 is at least one selected from the group consisting of Mn, Ti, Y, Nb, Mo, and W. The element $M^2$ is at least two selected from the group consisting of Mg, Ca, Sr, and Ba, and the element $M^2$ includes at least Mg and Ca. The formula 1 satisfies $0.97 \leq x \leq 1.1$, $0.05 \leq y \leq 0.35$, $0.005 \leq z \leq 0.1$, $0.0001 \leq v \leq 0.05$, and $0.0001 \leq w < 0.05$. The composite oxide is secondary particles formed of an aggregate of primary particles. The average particle diameter of the primary particles of the composite oxide is 0.1 μm or more and 3 μm or less, and the average particle diameter of the secondary particles of the composite oxide is 8 μm or more and 20 μm or less.

[Citation List]

[Patent Literature]

[PTL 1] Japanese Laid-Open Patent Publication No. 2014-194930
[PTL 2] Japanese Laid-Open Patent Publication No. 2006-310181

[Summary of Invention]

[Technical Problem]

The price of Co, which is used in the lithium-transition metal composite oxide, has been increasing in recent years. Reducing the Co content in the lithium-transition metal composite oxide is advantageous in terms of costs, but this leads to deterioration in the cycle characteristics of the non-aqueous electrolyte secondary battery. This is presumably because the lattice structure of the lithium-transition metal composite oxide becomes unstable, and the deterioration is accelerated due to side reactions.

[Solution to Problem]

One aspect of the present disclosure relates to a non-aqueous electrolyte secondary battery, including: a positive electrode; a negative electrode; and a non-aqueous electrolyte, wherein the positive electrode includes a positive electrode active material, the positive electrode active material includes a lithium-transition metal composite oxide containing Ni, Mn, and Al, proportions of Ni, Mn, and Al in metal elements other than Li contained in the lithium-transition metal composite oxide are, respectively, Ni: 50 atm% or more, Mn: 10 atm% or less, and Al: 10 atm% or less, when the lithium-transition metal composite oxide contains Co, a content of Co in the metal elements other than Li is 1.5 atm% or less, and the non-aqueous electrolyte includes a fluorosulfonic acid salt.

[Advantageous Effects of Invention]

Even when a lithium-transition metal composite oxide not containing Co or a lithium-transition metal composite oxide with a small Co content is used, a non-aqueous electrolyte secondary battery with excellent cycle characteristics can be provided.

While the novel features of the invention are set forth particularly in the appended claims, the invention, both

as to organization and content, will be better understood and appreciated, along with other objects and features thereof, from the following detailed description taken in conjunction with the drawings.

[Brief Description of Drawing]

[FIG. 1] A partially cut-away schematic oblique view of a non-aqueous electrolyte secondary battery according to one embodiment of the present disclosure.

[Description of Embodiments]

A non-aqueous electrolyte secondary battery according to the present disclosure includes a positive electrode, a negative electrode, and a non-aqueous electrolyte. The positive electrode includes a positive electrode active material. The positive electrode active material includes a lithium-transition metal composite oxide containing Ni, Mn, and Al.

If the Co content of the lithium-containing composite oxide can be reduced, and the Ni content can be increased, this is advantageous in terms of costs, and a high capacity can be ensured. On this basis, in the lithium-transition metal composite oxide according to the present disclosure, the Ni content is set high. On the other hand, the lithium-transition metal composite oxide according to the present disclosure does not contain Co, or the proportion of Co in the metal elements other than Li is restricted to 1.5 atm% or less. Hereinafter, the lithium-transition metal composite oxide according to the present disclosure is sometimes referred to as a "composite oxide NMA".

The proportions of Ni, Mn, and Al in the metal elements other than Li contained in the composite oxide NMA are, respectively, Ni: 50 atm% or more, Mn: 10 atm% or less, and Al: 10 atm% or less, and the composite oxide NMA does not contain Co, or the proportion of Co in the metal elements other than Li is 1.5 atm% or less.

Mn and Al contribute to the stabilization of the crystal structure of the composite oxide NMA with a reduced Co content. However, in the composite oxide NMA, since the Co content is restricted to as low as 1.5 atm% or less, and the Ni content is high, the crystal structure tends to be unstable, and metals such as Al and Ni can leach out of the composite oxide NMA. When leaching of metals occurs, the positive electrode capacity decreases, and the cycle characteristics (or capacity retention rate) deteriorate. Especially, in the composite oxide NMA with a high Ni content, the leached Ni may form an oxide surface film having a structure that inhibits the absorption and release of Li ions, on the particle surfaces of the composite oxide NMA, which may cause the internal resistance to increase. In addition, the leached metal may deposit on the negative electrode, which may affect the durability of the secondary battery.

In view of the above, the present disclosure uses a composite oxide NMA, in combination with a non-aqueous electrolyte including a fluorosulfonic acid salt. The anion produced from the fluorosulfonic acid salt is considered to form a robust surface film with Al, on the particle surfaces of the composite oxide NMA, and has an effect of suppressing the leaching of metals. Therefore, excellent cycle characteristics can be ensured, and also, an increase in internal resistance during repeated charge and discharge can be suppressed. The surface film derived from the fluorosulfonic acid salt is excellent in ionic conductivity, and therefore, although being robust, is considered to have little influence on the inhibition of the electrode reaction.

The non-aqueous electrolyte may further includes an isocyanuric acid ester component having at least one unsaturated organic group with an unsaturated carbon-carbon bond. The isocyanuric acid ester component forms a surface film that suppresses side reactions, on the particle surfaces of the composite oxide NMA. This can ensure more excellent cycle characteristics, and further suppress the increase in internal resistance. It is noted however that, with the isocyanuric acid ester component alone, a surface film is excessively thickly formed in some cases, which may increase the resistance to the ionic conduction. In contrast, a surface film derived from a combination of the fluorosulfonic acid salt and the isocyanuric acid ester component has excellent ionic conductivity. That is, the fluorosulfonic acid salt also has an effect of improving the ionic conductivity of the surface film derived from the isocyanuric acid ester component.

Even when the fluorosulfonic acid salt is combined with a lithium-transition metal composite oxide in which the Co content is higher than that in the composite oxide NMA, the effect of improving the cycle characteristics and the effect of suppressing the increase in internal resistance cannot be significantly obtained. The effect produced by the fluorosulfonic acid salt becomes remarkable when used in combination with the composite oxide NMA. The effect becoming remarkable in the composite oxide NMA is presumably because, in the composite oxide NMA, as compared to in the lithium-transition metal composite oxide having a higher Co content, the resistance of the composite oxide itself is high, and its particles are relatively brittle. The particles of the composite oxide NMA are prone to crack, and leaching of metals tends to be significant, and the increase of resistance associated with charge and discharge tends to be apparent. Therefore, in the composite oxide NMA, the breadth of improvement in characteristics by the surface film derived from the fluorosulfonic acid salt is increased. On the other hand, the lithium-transition metal composite oxide with a high Co content is more superior in such an aspect, and the necessity of using the fluorosulfonic acid salt is low.

In the following, the non-aqueous electrolyte secondary battery according to the present disclosure will be specifically described for each component.

[Positive electrode]

The positive electrode includes a positive electrode active material. The positive electrode usually includes a positive electrode current collector, and a layer of a positive electrode mixture (hereinafter, a positive electrode mixture layer) held on the positive electrode current collector. The positive electrode mixture layer can be formed by applying a positive electrode slurry prepared by dispersing constituent components of the positive electrode mixture in a dispersion medium, onto a surface of the positive electrode current collector, followed by drying. The applied film after drying may be rolled as needed.

The positive electrode mixture contains a positive electrode active material as an essential component, and may contain a binder, a thickener, a conductive agent, and the like as optional components.

(Positive electrode active material)

The positive electrode active material contains a composite oxide NMA. The composite oxide NMA contains Ni, Mn, and Al, and may contain a small amount of Co, or may contain no Co. In view of the reduction in manufacturing costs, the Co content is desirably as small as possible. The content of Co in the metal elements other than Li is 1.5 atm% or less, preferably 1.0 atm% or less, more preferably 0.5 atm% or less, and most preferably, Co is not contained. On the other hand, in view of increasing the capacity, in the composite oxide NMA, the proportions of Ni, Mn, and Al in the metal elements other than Li are Ni: 50 atm% or more, Mn: 10 atm% or less, and Al: 10 atm% or less. The Ni content in the metal elements other than Li is desirably 80 atm% or more, more desirably 90 atm% or more, and may be 92 atm% or more. The Mn content may be 7 atm% or less, may be 5 atm% or less, and may be 3 atm% or less. The Al content may be 9 atm% or less, may be 7 atm% or less, and may be 5 atm% or less. The composite oxide NMA has, for example, a layered crystal structure (e.g., rock-salt type crystal structure).

The composite oxide NMA is, for example, represented by a formula: $Li_{\alpha}Ni_{(1-x1-x2-y-z)}Co_{x1}Mn_{x2}Al_{y}M_{z}O_{2+\beta}$. The element M is an element other than Li, Ni, Mn, Al, Co, and oxygen.

In the above formula, the $\alpha$ representing the atomic ratio of lithium is, for example, $0.95 \leq \alpha \leq 1.05$. The $\alpha$ increases and decreases during charge and discharge. In the $(2+\beta)$ representing the atomic ratio of oxygen, $\beta$ satisfies $-0.05 \leq \beta \leq 0.05$.

The 1-x1-x2-y-z (= v) representing the atomic ratio of Ni, is, for example, 0.5 or more, may be 0.8 or more, may be 0.90 or more, and may be 0.92 or more. The v representing the atomic ratio of Ni may be 0.95 or less. The v may be 0.5 or more and 0.95 or less ($0.5 \leq v \leq 0.95$), may be 0.80 or more and 0.95 or less, may be 0.90 or more and 0.95 or less, and may be 0.92 or more and 0.95 or less.

The higher the atomic ratio v of Ni is, the more the lithium ions can be extracted from the composite oxide NMA during charge, and the capacity can be increased. However, Ni in the composite oxide NMA whose capacity has been increased as above has a tendency to have a higher valence. Also, when the atomic ratio of Ni is increased, the atomic ratios of other elements are relatively decreased. In this case, the crystal structure tends to become unstable especially in a fully charged state and change to a crystal structure into and from which lithium ions are difficult to be absorbed and released reversibly during repeated charge and discharge, and this tends to cause inactivation. As a result, the cycle characteristics tend to deteriorate. In the non-aqueous electrolyte secondary battery according to the present disclosure, despite the use of a composite oxide NMA with such a high Ni content, by using a non-aqueous electrolyte containing a fluorosulfonic acid component, excellent cycle characteristics can be ensured.

The x1 representing the atomic ratio of Co is, for example, 0.015 or less ($0 \leq x1 \leq 0.015$), may be 0.01 or less, and may be 0.005 or less. When the x1 is 0, this encompasses a case where Co is below the detection limit.

The x2 representing the atomic ratio of Mn is, for example, 0.1 or less ($0 < x2 \leq 0.1$), may be 0.07 or less, may be 0.05 or less, and may be 0.03 or less. The x2 may be 0.01 or more, and may be 0.02 or more. Mn contributes to stabilize the crystal structure of the composite oxide NMA, and containing Mn, which is inexpensive, in the composite oxide NMA is advantageous for cost reduction.

The y representing the atomic ratio of Al is, for example, 0.1 or less ($0 < y \leq 0.1$), may be 0.09 or less, may be 0.07 or less, and may be 0.05 or less. The y may be 0.01 or more, and may be 0.02 or more. Al contributes to stabilize the crystal structure of the composite oxide NMA. Preferably, $0.05 \leq x2+y \leq 0.1$. In this case, the effect produced by the fluorosulfonic acid salt and the effect of suppressing the increase in internal resistance after repeated charge and discharge become more apparent.

The z representing the atomic ratio of the element M is, for example, $0 \leq z \leq 0.10$, may be $0 < z \leq 0.05$, and may be $0.001 \leq z \leq 0.005$.

The element M may be at least one selected from the group consisting of Ti, Zr, Nb, Mo, W, Fe, Zn, B, Si, Mg, Ca, Sr, Sc, and Y. In particular, when at least one selected from the group consisting of Nb, Sr, and Ca is contained in the composite oxide MNA, it is considered that the surface structure of the composite oxide NMA is stabilized, the resistance is reduced, and the leaching of metals is further suppressed. It is more effective when the element M is

localized near the particle surfaces of the composite oxide NMA.

The contents of the elements constituting the composite oxide NMA can be measured using an inductively coupled plasma atomic emission spectroscopy (ICP-AES), an electron probe microanalyzer (EPMA), an energy dispersive X-ray spectroscopy (EDX), or the like.

The composite oxide NMA is, for example, secondary particles formed of an aggregate of primary particles. The particle diameter of the primary particles is typically 0.05 μm or more and 1 μm or less. The average particle diameter of the secondary particles of the composite oxide is, for example, 3 μm or more and 30 μm or less, and may be 5 μm or more and 25 μm or less.

In the present specification, the average particle diameter of the secondary particles means a particle diameter at 50% cumulative volume (volume average particle diameter) in a particle diameter distribution measured by a laser diffraction and scattering method. Such a particle diameter is sometimes referred to as D50. As the measuring apparatus, for example, "LA-750", available from Horiba, Ltd. (HORIBA) can be used.

The composite oxide NMA can be obtained, for example, by the following procedures. First, to a solution of a salt containing metal elements constituting the composite oxide NMA, under stirring, a solution containing an alkali, such as sodium hydroxide, is added dropwise, to adjust the pH to the alkali side (e.g., 8.5 to 12.5), thereby to allow a composite hydroxide containing metal elements (Ni, Mn, Al, Co if necessary, an element M if necessary) to precipitate. Subsequently, the composite hydroxide is baked, to obtain a composite oxide (hereinafter sometimes referred to as a "raw material composite oxide") containing the metal elements The baking temperature at this time is not particularly limited, but is, for example, 300 °C to 600 °C.

Next, by mixing the raw material composite oxide with a lithium compound, and, if necessary, a compound containing the element M, and baking the mixture under an oxygen gas flow, a composite oxide NMA can be obtained. The baking temperature at this time is not particularly limited, but is, for example, 450 °C or higher and 800 °C or lower. Each baking may be performed in a single stage, or in multiple stages, or while raising the temperature.

In mixing the raw material composite oxide and the lithium compound, by mixing a compound containing the element M, the element M can be localized near the particle surfaces of the composite oxide NMA.

As the lithium compound, lithium oxide, lithium hydroxide, lithium carbonate, a lithium halide, a lithium hydride, and the like may be used.

The positive electrode active material can contain a lithium-transition metal composite oxide other than the composite oxide NMA, but preferably, the proportion of the composite oxide NMA is high. The proportion of the composite oxide NMA in the positive electrode active material is, for example, 90 mass% or more, and may be 95 mass% or more. The proportion of the composite oxide in the positive electrode active material is 100 mass% or less.

(Others)

As the binder, for example, a resin material is used. Examples of the binder include fluorocarbon resins, polyolefin resins, polyamide resins, polyimide resins, acrylic resins, vinyl resins, and rubbery materials (e.g., styrene-butadiene copolymer (SBR)). The binder may be used singly or in combination of two or more kinds.

As the thickener, for example, cellulose derivatives, such as cellulose ethers, are exemplified. Examples of the cellulose derivatives include carboxymethyl cellulose (CMC) and modified products thereof, and methyl cellulose. The thickener may be used singly or in combination of two or more kinds.

As the conductive agent, for example, conductive fibers, and conductive particles are exemplified. Examples of the conductive fibers include carbon fibers, carbon nanotubes, and metal fibers. Examples of the conductive particles include conductive carbon (e.g., carbon black, graphite) and metal powder. The conductive agent may be used singly or in combination of two or more kinds.

As the dispersion medium used in the positive electrode slurry, although not particularly limited, for example, water, an alcohol, N-methyl-2-pyrrolidone (NMP), and mixed solvents thereof can be used.

As the positive electrode current collector, for example, a metal foil can be used. The positive electrode current collector may be porous. Examples of the porous current collector include a net, a punched sheet, and an expanded metal. The material of the positive electrode current collector may be, for example, stainless steel, aluminum, an aluminum alloy, and titanium. The thickness of the positive electrode current collector is not particularly limited, but is, for example, 1 to 50 μm, and may be 5 to 30 μm.

[Negative electrode]

The negative electrode includes a negative electrode active material. The negative electrode usually includes a negative electrode current collector, and a layer of a negative electrode mixture (hereinafter, a negative electrode mixture layer) held on the negative electrode current collector. The negative electrode mixture layer can be formed by applying a negative electrode slurry prepared by dispersing constituent components of the negative electrode mixture

in a dispersion medium, onto a surface of the negative electrode current collector, followed by drying. The applied film after drying may be rolled as needed.

The negative electrode mixture contains a negative electrode active material as an essential component, and may contain a binder, a thickener, a conductive agent, and the like as optional components.

(Negative electrode active material)

As the negative electrode active material, metal lithium, a lithium alloy, and the like may be used, but a material capable of electrochemically absorbing and releasing lithium ions preferably used. Such a material includes a carbonaceous material and a Si-containing material. The negative electrode may contain these negative electrode active materials singly, or in combination of two or more kinds.

Examples of the carbonaceous material include graphite, graphitizable carbon (soft carbon), and non-graphitizable carbon (hard carbon). The carbonaceous material may be used singly, or in combination of two or more kinds.

In particular, as the carbonaceous material, graphite is preferred because of its excellent stability during charge and discharge and its low irreversible capacity. Examples of the graphite include natural graphite, artificial graphite, and graphitized mesophase carbon particles.

Examples of the Si-containing material include elementary Si, a silicon alloy, and a silicon compound (e.g., silicon oxide), and a composite material including a lithium-ion conductive phase (matrix) and a silicon phase dispersed therein. The silicon oxide is exemplified by $SiO_x$ particles. The x may be, for example, $0.5 \leq x < 2$, and may be $0.8 \leq x \leq 1.6$. The lithium-ion conductive phase can be at least one selected from the group consisting of a $SiO_2$ phase, a silicate phase, and a carbon phase.

As the binder, the thickener, and the conductive agent, and the dispersion medium used in the negative electrode slurry, for example, the materials exemplified for the positive electrode can be used.

As the negative electrode current collector, for example, a metal foil can be used. The negative electrode current collector may be porous. The material of the negative electrode current collector may be, for example, stainless steel, nickel, a nickel alloy, copper, and a copper alloy. The thickness of the negative electrode current collector is not particularly limited, but is, for example, 1 to 50 μm, and may be 5 to 30 μm.

[Non-aqueous electrolyte]

The non-aqueous electrolyte usually contains a non-aqueous solvent and a lithium salt.

(Fluorosulfonic acid salt)

The non-aqueous electrolyte contains a fluorosulfonic acid salt represented by a formula (1):

[Chem. 1]

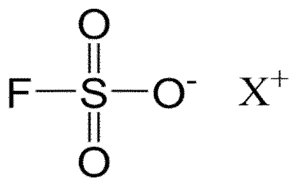

In the formula (1), X is a cation.

The fluorosulfonic acid salt may be at least one selected from the group consisting of $FSO_3Li$ (lithium fluorosulfonate) and $FSO_3Na$ (sodium fluorosulfonate). In particular, $FSO_3Li$ (lithium fluorosulfonate), which is a lithium salt, is preferred. The fluorosulfonic acid salt can produce a fluorosulfonate anion in the non-aqueous electrolyte. Therefore, the fluorosulfonate anion is counted as the fluorosulfonic acid salt.

The content of the fluorosulfonic acid salt in the non-aqueous electrolyte may be 3 mass% or less, may be 1.5 mass% or less, may be 1 mass% or less, and may be 0.5 mass% or less. When the content of the fluorosulfonic acid salt is in such a range, excessive surface film formation on the surface of the positive electrode is suppressed, and the effect of suppressing the increase in internal resistance when charge and discharge are repeated can be enhanced. In the non-aqueous electrolyte secondary battery, the content of the fluorosulfonic acid salt in the non-aqueous electrolyte changes during storage or during charge and discharge. It suffices therefore that the fluorosulfonic acid salt remains at a concentration equal to or above the detection limit, in the non-aqueous electrolyte collected from the non-aqueous

electrolyte secondary battery. The content of the fluorosulfonic acid salt in the non-aqueous electrolyte may be 0.01 mass% or more.

The content of the fluorosulfonic acid salt in the non-aqueous electrolyte used for manufacturing a non-aqueous electrolyte secondary battery may be 0.01 mass% or more, and may be 0.1 mass% or more, or 0.3 mass% or more. The content of the fluorosulfonic acid salt in the non-aqueous electrolyte used for manufacturing a non-aqueous electrolyte secondary battery is, for example, 1.5 mass% or less, and may be 1 mass% or less, or 0.5 mass% or less. These lower and upper limits can be combined in any combination.

(Isocyanuric acid ester component)

The non-aqueous electrolyte may further contain an isocyanuric acid ester component having at least one unsaturated organic group with an unsaturated carbon-carbon bond. The unsaturated organic group is bonded to, for example, at least one of the three nitrogen atoms constituting the ring of an isocyanuric acid. The isocyanuric acid ester component may have the above unsaturated organic group on two or three of the three nitrogen atoms constituting the ring of an isocyanuric acid.

The isocyanuric acid ester component is represented by, for example, a formula (2):

[Chem. 2]

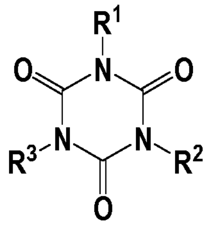

(1)

Here, $R^1$ to $R^3$ are independently a hydrogen atom, a halogen atom, or an organic group, and at least one of $R^1$ to $R^3$ is an unsaturated organic group with an unsaturated carbon-carbon bond. Of the $R^1$ to $R^3$, at least two may be the same, or all may be different.

The halogen atom represented by $R^1$ to $R^3$ may be a fluorine, chlorine, bromine, or iodine atom. The organic group may be, for example, an organic group having 1 to 20 carbons. Examples of the organic group include a hydrocarbon group which may have a substituent, an alkoxy group, an alkoxycarbonyl group, an acyl group, and a nitrile group. The alkoxy group is represented by $R^a$-O-, the alkoxycarbonyl group is represented by $R^a$-O-C(=O)-, and the acyl group is represented by $R^a$-C(=O)-. In these groups, $R^a$ is a hydrocarbon group which may have a substituent.

The hydrocarbon group represented by $R^1$ to $R^3$ and $R^a$ may be an aliphatic hydrocarbon group, an alicyclic hydrocarbon group, or an aromatic hydrocarbon group. The aliphatic hydrocarbon group includes an alkyl group, an alkenyl group, an alkynyl group, and a dienyl group. The aliphatic hydrocarbon group may be linear or branched. The aliphatic hydrocarbon group may have, for example, 1 to 20 carbon atoms, may have 1 to 10 carbon atoms, and may have 1 to 6 or 1 to 4 carbon atoms. The alicyclic hydrocarbon group includes a cycloalkyl group, a cycloalkenyl group, and a cycloalkadienyl group. The alicyclic hydrocarbon group may have, for example, 4 to 20 carbon atoms, may have 5 to 10 carbon atoms, and may have 5 to 8 or 5 to 6 carbon atoms. The alicyclic hydrocarbon group encompasses a condensed ring in which aromatic rings, such as benzene rings or pyridine rings, are condensed. The aromatic hydrocarbon group includes, for example, an aryl group. Examples of the aryl group include a phenyl group, a naphthyl group, and a biphenyl group. The aromatic hydrocarbon group has, for example, 6 to 20 carbon atoms, and may have 6 to 14 or 6 to 10 carbon atoms. The aromatic hydrocarbon group encompasses a condensed ring in which non-aromatic hydrocarbon rings or non-aromatic heterocyclic rings are condensed. The hydrocarbon ring or heterocyclic ring may be a 4- to 8-membered ring, maybe a 5- to 8-membered ring, and may be a 5- or 6-membered ring.

Examples of the alkyl group include a methyl group, an ethyl group, an n-propyl group, an iso-propyl group, an n-butyl group, a sec-butyl group, a tert-butyl group, a hexyl group, a 2-ethylhexyl group, a decyl group, a tetradecyl group, and a stearyl group. Examples of the alkenyl group include a vinyl group, an allyl group, a propa-2-en-1-yl group, a 4-hexenyl group, and a 5-hexenyl group. Examples of the alkynyl group include an ethynyl group, and a propargyl group. Examples of the dienyl group include a 1,3-butadiene-1-yl group. Examples of the cycloalkyl group include a cyclopentyl group, a cyclohexyl group, and a cyclooctyl group. Examples of the cycloalkenyl group include a cyclohexenyl group, and a cyclooctenyl group. Examples of the cycloalkadienyl group includes a cyclopentadienyl group.

The substituent which may be included in the hydrocarbon group is exemplified by, for example, a halogen atom, a hydroxy group, an alkyl group, an alkenyl group, a dienyl group, an aryl group, an aralkyl group, an alkoxy group, an alkoxycarbonyl group, an acyl group, an acyloxy group, a nitrile group, and an oxo group (=O). Examples of the

halogen atom include fluorine atom, chlorine atom, bromine atom, and iodine atom. The alkyl group and the alkoxy group each have, for example, 1 to 6 carbon atoms, and may have 1 to 4 carbon atoms. The alkenyl group, the alkoxycarbonyl group, the acyl group, and the acyloxy group each have, for example, 2 to 6 carbon atoms, and may have 2 to 4 carbon atoms. The dienyl group has, for example, 4 to 8 carbon atoms. The aryl group may be, for example, an aryl group with 6 to 10 carbons, such as a phenyl group. The aralkyl group may be, for example, an aralkyl group with 7 to 12 carbons, such as a benzyl group and a phenethyl group. The hydrocarbon group may have one or two or more of these substituents. When the hydrocarbon group has two or more substituents, at least two substituents may be the same, or all substituents may be different.

The above unsaturated organic group has an unsaturated carbon-carbon bond. The unsaturated carbon-carbon bond includes, for example, a carbon-carbon double bond, and a carbon-carbon triple bond. As the unsaturated organic group, among the organic groups exemplified above, for example, an alkenyl group, an alkynyl group, a dienyl group, a cycloalkenyl group, a cycloalkadienyl group, and an aryl group are exemplified. In view of excellent surface film formation on the positive electrode, among these, an alkenyl group, an alkynyl group, and an aryl group are preferred, and an alkenyl group and an alkynyl group are more preferred. Preferred as the alkenyl group are a vinyl group, an allyl group, and the like. Preferred as the alkynyl group is a propargyl group. The alkenyl group, the alkynyl group, and the aryl group encompass those having the above substituent. As the substituent that may be included in the alkenyl group and the alkynyl group, among the above substituents, a halogen atom, a hydroxy group, an aryl group, an aralkyl group, an alkoxy group, an alkoxycarbonyl group, an acyl group, an acyloxy group, and a nitrile group are exemplified. In particular, an isocyanuric acid ester component having two or three selected from the group consisting of an alkenyl group and an alkynyl group is preferred, and for example, triallyl isocyanurate and diallyl isocyanurate are preferred. The triallyl isocyanurate (TIC) and the diallyl isocyanurate (DIC) are respectively represented by the following formulas.

[Chem. 3]

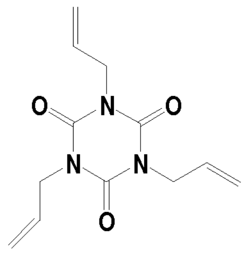

TIC

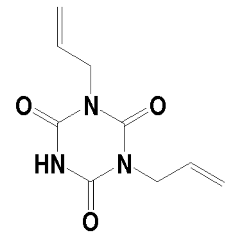

DIC

The content of the isocyanuric acid ester component in the non-aqueous electrolyte is preferably 1.5 mass% or less, and may be 1 mass% or less or 0.5 mass% or less. When the content of the isocyanuric acid ester component is in such a range, excessive surface film formation on the surface of the positive electrode is suppressed, and the effect of suppressing the increase in internal resistance when charge and discharge are repeated can be enhanced. In the non-aqueous electrolyte secondary battery, the content of the isocyanuric acid ester component in the non-aqueous electrolyte changes during storage or during charge and discharge. It suffices therefore that the isocyanuric acid ester component remains at a concentration equal to or above the detection limit, in the non-aqueous electrolyte collected from the non-aqueous electrolyte secondary battery. The content of the isocyanuric acid ester component in the non-aqueous electrolyte may be 0.01 mass% or more.

The content of the isocyanuric acid ester component in the non-aqueous electrolyte used for manufacturing a non-aqueous electrolyte secondary battery may be 0.01 mass% or more, 0.1 mass% or more, or 0.3 mass% or more. The content of the isocyanuric acid ester component in the non-aqueous electrolyte used for manufacturing a non-aqueous electrolyte secondary battery is, for example, 1.5 mass% or less, and may be 1 mass% or less, or 0.5 mass% or less. These lower and upper limits can be combined in any combination.

The contents of the fluorosulfonic acid salt and the isocyanuric acid ester component in the non-aqueous electrolyte can be determined, for example, using gas chromatography under the following conditions.

Instrument used: GC-2010 Plus, available from Shimadzu Corporation
Column: HP-1 (membrane thickness: 1 μm, inner diameter: 0.32 mm, length: 60 m), available from J&W Corporation
Column temperature: raised from 50 °C to 90 °C at a temperature rise rate of 5 °C/min and held at 90 °C for 15 minutes, and then, raised from 90 °C to 250 °C at a temperature rise rate of 10 °C/min and held at 250 °C for 15 minutes
Split ratio: 1/50

Linear velocity: 30.0 cm/sec
Inlet temperature: 270 °C
Injection amount: 1 μL
Detector: FID 290 °C (sens. $10^1$)

In the non-aqueous electrolyte, the mass ratio of the isocyanuric acid ester component to the fluorosulfonic acid salt (= isocyanuric acid ester component / fluorosulfonic acid salt) is, for example, preferably 0.5 to 1.5, and may be 0.8 to 1.2. When the mass ratio between the two components is in such a range, the composition of the surface film formed on the particle surfaces of the composite oxide NMA is well balanced. In other words, a surface film having excellent ionic conductivity and being highly effective in suppressing the leaching of metals and in suppressing the increase in internal resistance when charge and discharge are repeated is formed.

(Non-aqueous solvent)

Examples of the non-aqueous solvent include cyclic carbonic acid esters, chain carbonic acid esters, cyclic carboxylic acid esters, and chain carboxylic acid esters. The cyclic carbonic acid esters are exemplified by propylene carbonate (PC) and ethylene carbonate (EC). The chain carbonic acid esters are exemplified by diethyl carbonate (DEC), ethyl methyl carbonate (EMC), and dimethyl carbonate (DMC). The cyclic carboxylic acid esters are exemplified by γ-butyrolactone (GBL), and γ-valerolactone (GVL). The chain carboxylic acid esters are exemplified by methyl formate, ethyl formate, propyl formate, methyl acetate (MA), ethyl acetate, propyl acetate, methyl propionate, ethyl propionate, and propyl propionate. The non-aqueous electrolyte may contain these non-aqueous solvent singly, or in combination of two or more kinds.

(Lithium salts)

Examples of the lithium salt include: $LiClO_4$, $LiBF_4$, $LiPF_6$, $LiAlCl_4$, $LiSbF_6$, LiSCN, $LiCF_3SO_3$, $LiCF_3CO_2$, $LiAsF_6$, $LiB_{10}Cl_{10}$, lithium lower aliphatic carboxylate, LiCl, LiBr, LiI, borates, and imides. Examples of the borates include lithium bisoxalate borate, lithium difluorooxalate borate, lithium bis(1,2-benzenediolate(2-)-O,O') borate, lithium bis(2,3-naphthalenediolate(2-)-O,O') borate, lithium bis(2,2'-biphenyldiolate(2-)-O,O') borate, and lithium bis(5-fluoro-2-olate-1-benzenesulfonate-O,O') borate. Examples of the imides include lithium bisfluorosulfonyl imide ($LiN(FSO_2)_2$), lithium bis(trifluoromethanesulfonyl)imide ($LiN(CF_3SO_2)_2$), lithium trifluoromethanesulfonyl nonafluorobutanesulfonyl imide ($LiN(CF_3SO_2)(C_4F_9SO_2)$), and lithium bis(pentafluoroethanesulfonyl)imide ($LiN(C_2F_5SO_2)_2$). The non-aqueous electrolyte may contain these lithium salts singly, or in combination of two or more kinds.

The concentration of the lithium salt (when the fluorosulfonic acid salt is lithium fluorosulfonate, the lithium salt other than lithium fluorosulfonate) in the non-aqueous electrolyte is, for example, 0.5 mol/L or more and 2 mol/L or less.

The non-aqueous electrolyte may contain another additive. The other additive is referred to as a second component. The second component is, for example, at least one selected from the group consisting of vinylene carbonate, fluoroethylene carbonate, and vinylethylene carbonate.

[Separator]

It is desirable to interpose a separator between the positive electrode and the negative electrode. The separator is excellent in ion permeability and has moderate mechanical strength and electrically insulating properties. The separator may be, for example, a microporous thin film, a woven fabric, or a nonwoven fabric. As the material of the separator, a polyolefin, such as polypropylene and polyethylene, is preferred.

In an exemplary structure of the non-aqueous electrolyte secondary battery, an electrode group formed by winding the positive electrode and the negative electrode with the separator interposed therebetween is housed together with the non-aqueous electrolyte in an outer body. However, without limited thereto, an electrode group in a different form may be adopted. For example, the electrode group may be of a stacked type formed by stacking the positive electrode and the negative electrode with the separator interposed therebetween. The type of the non-aqueous electrolyte secondary battery is also not particularly limited, and may of a cylindrical, prismatic, coin, button, or laminate type.

In the following, the structure of a prismatic non-aqueous electrolyte secondary battery as an example of the non-aqueous electrolyte secondary battery according to the present invention will be described with reference to FIG. 1.

The battery includes a bottomed prismatic battery case 4, and an electrode group 1 and a non-aqueous electrolyte (not shown) housed in the battery case 4. The electrode group 1 has a long negative electrode, a long positive electrode, and a separator interposed between the positive electrode and the negative electrode. A negative electrode current collector of the negative electrode is electrically connected, via a negative electrode lead 3, to a negative electrode terminal 6 provided on a sealing plate 5. The negative electrode terminal 6 is electrically insulated from the sealing plate

5 by a gasket 7 made of resin. A positive electrode current collector of the positive electrode is electrically connected, via a positive electrode lead 2, to the back side of the sealing plate 5. That is, the positive electrode is electrically connected to the battery case 4 serving as a positive electrode terminal. The periphery of the sealing plate 5 is engaged with the opening end of the battery case 4, and the engaging portion is laser-welded. The sealing plate 5 is provided with an injection port for non-aqueous electrolyte, which is closed with a sealing plug 8 after electrolyte injection.

The present invention will be more specifically described below with reference to Examples and Comparative Examples, but the present invention is not limited to the following Examples.

[Examples]

«Examples 1 to 4 and Comparative Examples 1 to 5»

A non-aqueous electrolyte secondary battery was fabricated and evaluated in the following procedure.

(1) Production of positive electrode

To 95 parts by mass of positive electrode active material particles, 2.5 parts by mass of acetylene black, 2.5 parts by mass of polyvinylidene fluoride, and an appropriate amount of NMP were added, and mixed, to obtain a positive electrode slurry. Next, the positive electrode slurry was applied onto a surface of an aluminum foil, and the applied film was dried, and then rolled, to form a positive electrode mixture layer (thickness: 95 μm, density: 3.6 g/$cm^3$) on both sides of the aluminum foil. A positive electrode was thus obtained.

The positive electrode active material particles were produced by the following procedures.

An aqueous solution was prepared by dissolving nickel sulfate, aluminum sulfate, and, if necessary, cobalt sulfate or manganese sulfate. The concentration of the nickel sulfate in the aqueous solution was set to 1 mol/L, and the concentrations of other sulfates were adjusted such that the relationship of the ratio between Ni and each metal element was as shown in Table 1.

At 50 °C, to the aqueous solution, under stirring, an aqueous solution containing sodium hydroxide at a concentration of 30 mass% was added dropwise until the pH of the mixture reached 12, to precipitate a hydroxide. The hydroxide was collected by filtration, washed with water, and dried. The dry product was baked at 500 °C for 8 hours in a nitrogen atmosphere, to give a composite oxide.

The resulting composite oxide was mixed with lithium hydroxide, and an oxide containing, if necessary, an element M (specifically, niobium oxide or strontium oxide), so that the atomic ratio between Li, the total of Ni, Co, Mn, and Al, and the element M was 1:1:z (specifically, the value of z shown in Table 1). The mixture was baked, using an electric furnace, by heating from room temperature to 650 °C in an oxygen atmosphere at a temperature rise rate of 2.0 °C/min. This was followed by baking by heating from 650 °C to 715 °C at a temperature rise rate of 0.5 °C/min. The obtained baked product was washed with water, and dried, to give a composite oxide NMA (positive electrode active material particles).

(2) Production of negative electrode

A silicon composite material and graphite were mixed at a mass ratio of 5:95 and used as a negative electrode active material. The negative electrode active material was mixed with a sodium salt of CMC (CMC-Na), SBR, and water at a predetermined mass ratio, to prepare a negative electrode slurry. Next, the negative electrode slurry was applied onto a surface of a copper foil as a negative electrode current collector, and the applied film was dried, and then rolled, to form a negative electrode mixture layer on both sides of the copper foil.

(3) Preparation of non-aqueous electrolyte

To a mixed solvent of EC and EMC (EC:EMC = 3:7 (ratio by volume)), $LiPF_6$ and, if necessary, a fluorosulfonic acid salt (first component) and an isocyanuric acid ester component (second component) as shown in Table 1 were dissolved, to prepare a non-aqueous electrolyte (liquid electrolyte). The concentration of the $LiPF_6$ in the non-aqueous electrolyte was set to 1.0 mol/L. The concentrations (initial concentrations) of the first component and the second component in the prepared non-aqueous electrolyte were set to the values (mass%) shown in Table 1.

(4) Preparation of non-aqueous electrolyte secondary battery

To the positive electrode obtained above, a positive electrode lead made of Al was attached, and to the negative electrode obtained above, a negative electrode lead made of Ni was attached. In an inert gas atmosphere, the positive

electrode and the negative electrode were spirally wound with a polyethylene thin film (separator) interposed therebetween, to prepare a wound electrode group. The electrode group was housed in a bag-shaped outer body formed of a laminate sheet having an Al layer, and after injection of the non-aqueous electrolyte thereinto, the outer body was sealed, to complete a non-aqueous electrolyte secondary battery. In housing the electrode group in the outer body, part of the positive electrode lead and part of the negative electrode lead were each exposed externally from the outer body.

(5) Evaluation

The non-aqueous electrolyte secondary batteries obtained in Examples and Comparative Examples were each subjected to the following evaluations.

(a) Initial DC resistance value (DCIR)

In a 25 °C temperature environment, the battery was constant-current charged at a constant current of 0.3 It until the voltage reached 4.1 V, and then constant-voltage charged at a constant voltage of 4.1 V until the current reached 0.05 It. Subsequently, the battery was discharged at a constant current of 0.3 It for 100 minutes to a state of charge (SOC) of 50%.

The voltage values were measured when the battery at an SOC of 50% was discharged for 10 seconds at current values of 0 A, 0.1 A, 0.5 A, and 1.0 A, respectively. The relationship between the discharge current values and the voltage values after 10 seconds was linearly approximated by a least squares method, and from the absolute value of a slope of the line, a DCIR (initial DCIR) was calculated.

(b) Charge-discharge cycle test

In a 45 °C temperature environment, the battery was constant-current charged at a constant current of 0.5 It until the voltage reached 4.1 V, and then, constant-voltage charged at a constant voltage of 4.1 V until the current reached 0.02 It. Subsequently, the battery was constant-current discharged at a constant current of 0.5 It until the voltage reached 3.0 V. With this charging and discharging was taken as one cycle, 100 cycles were performed in total.

(c) DCIR increase rate (ΔDCIR)

Except for using the battery having subjected to 100 cycles of charging and discharging in the charge-discharge cycle test of the above (b), in the same manner as in the above (a), a DCIR (DCIR at 100th cycle) was calculated. The ratio of the DCIR after 100 cycles to the initial DCIR was calculated as a DCIR increase rate, using the following equation.

DCIR increase rate (%) = {(DCIR at 100th cycle - initial DCIR)} / initial DCIR × 100

(d) Capacity retention rate (MR)

In the charge-discharge cycle test of the above (b), the discharge capacity at the 1st cycle and the discharge capacity at the 100th cycle were measured, and the capacity retention rate was obtained from the following equation, and taken as an index of cycle characteristics.

$$\text{Capacity retention rate (\%)} = (\text{Discharge capacity at 100th cycle} / \text{Discharge capacity at 1st cycle}) \times 100$$

The evaluation results are shown in Table 1. In Table 1, E1 to E4 correspond to Examples 1 to 4, and C1 to C5 correspond to Comparative Examples 1 to 5.

[Table 1]

| | $LiNi_vCo_{x1}Mn_{x2}Al_yM_zO_2$ v = 1-x1-x2-y-z | | | | | | Second component | | First component | | MR (%) | ΔDCIR (%) |
|---|---|---|---|---|---|---|---|---|---|---|---|---|
| | v | x1 | x2 | y | M | z | Kind | mass% | Kind | mass% | | |
| E1 | 0.92 | 0 | 0.03 | 0.05 | Nb | 0.002 | TIC | 0.5 | $LiFSO_3$ | 1 | 89.1 | 18.3 |
| E2 | 0.92 | 0 | 0.03 | 0.05 | Nb | 0.002 | DIC | 0.5 | $LiFSO_3$ | 1 | 87.2 | 21.8 |

(continued)

| | $LiNi_vCo_{x1}Mn_{x2}Al_yM_zO_2$ v = 1-x1-x2-y-z | | | | | | Second component | | First component | | MR (%) | ΔDCIR (%) |
|---|---|---|---|---|---|---|---|---|---|---|---|---|
| | v | x1 | x2 | y | M | z | Kind | mass% | Kind | mass% | | |
| E3 | 0.92 | 0 | 0.03 | 0.05 | Sr | 0.001 | TIC | 0.5 | $LiFSO_3$ | 1 | 88.8 | 20.1 |
| E4 | 0.92 | 0 | 0.03 | 0.05 | Nb | 0.002 | - | 0 | $LiFSO_3$ | 1 | 86.9 | 23.9 |
| C1 | 0.92 | 0 | 0.03 | 0.05 | - | 0 | - | 0 | - | 0 | 83.4 | 34.4 |
| C2 | 0.92 | 0 | 0.03 | 0.05 | Nb | 0.002 | - | 0 | - | 0 | 85.9 | 28.2 |
| C3 | 0.92 | 0 | 0.03 | 0.05 | Sr | 0.001 | - | 0 | - | 0 | 85.1 | 29.1 |
| C4 | 0.91 | 0.04 | 0 | 0.05 | - | 0 | - | 0 | - | 0 | 85.5 | 29.8 |
| C5 | 0.91 | 0.04 | 0 | 0.05 | Nb | 0.002 | TIC | 0.5 | $LiFSO_3$ | 1 | 87.0 | 25.1 |

First, a comparison of C1 with C4 shows that when using the composite oxide NMA not containing Co (C1), as compared to when using the composite oxide NMA containing relatively much Co (C4), the capacity retention rate (MR) was decreased by 2.1% (85.5% → 83.4%), and the DCIR increase rate (ΔDCIR) was increased significantly by 4.6% (29.8% → 34.4%).

Next, a comparison of C1 with E1 shows that in E1 using a non-aqueous electrolyte containing the first component, relative to in C1, the capacity retention rate (MR) was significantly increased by 5.7% (83.4% → 89.1%), and the DCIR increase rate (ΔDCIR) was reduced by as much as 16.1% (34.4% → 18.3%). Likewise, in E2 to E4, the capacity retention ratio (MR) was greatly increased, and the DCIR increase rate (ΔDCIR) was significantly reduced. Moreover, in E1 to E4, the balance between the capacity retention rate (MR) and the DCIR increase rate (ΔDCIR) was also excellent.

On the other hand, a comparison of C4 with C5 shows that in C5 using a non-aqueous electrolyte containing the first component, relative to in C4, the capacity retention rate (MR) was increased by only 1.5% (85.5% → 87.0%), and the DCIR increase rate ( Δ DCIR), too, was reduced by only 4.7% (29.8% → 25.1%).

In other words, when using a composite oxide NMA not containing Co, by using a non-aqueous electrolyte containing the first component, the effect produced by the first component is remarkably exhibited, as compared to when using a composite oxide containing relatively much Co. When C1 is compared to C3, by using the element M (Nb, Sr), the capacity retention rate (MR) was improved by between 1.7% and 2.5%, and the DCIR increase rate (ΔDCIR) was reduced by between 5.3 % and 6.2%.

[Industrial Applicability]

The non-aqueous electrolyte secondary battery of the present disclosure is useful as a main power source for mobile communication devices, portable electronic devices, and the like. Furthermore, the non-aqueous electrolyte secondary batteries has a high capacity while being excellent in cycle characteristics, and is suitably applicable also to in-vehicle use. The application of the non-aqueous electrolyte secondary battery is, however, not limited to these.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

[Reference Signs List]

1: electrode group, 2: positive electrode lead, 3: negative electrode lead, 4: battery case, 5: sealing plate, 6: negative electrode terminal, 7: gasket, 8: sealing plug

## Claims

**1.** A non-aqueous electrolyte secondary battery, comprising:

a positive electrode; a negative electrode; and a non-aqueous electrolyte, wherein

the positive electrode includes a positive electrode active material,
the positive electrode active material includes a lithium-transition metal composite oxide containing Ni, Mn, and Al,
proportions of Ni, Mn, and Al in metal elements other than Li contained in the lithium-transition metal composite oxide are, respectively,
Ni: 50 atm% or more,
Mn: 10 atm% or less, and
Al: 10 atm% or less,
when the lithium-transition metal composite oxide contains Co, a content of Co in the metal elements other than Li is 1.5 atm% or less, and
the non-aqueous electrolyte includes a fluorosulfonic acid salt.

**2.** The non-aqueous electrolyte secondary battery according to claim 1, wherein
the lithium-transition metal composite oxide is represented by a following formula:

$$Li_{\alpha}Ni_{(1-x1-x2-y-z)}Co_{x1}Mn_{x2}Al_{y}M_{z}O_{2+\beta},$$

where

$0.95 \leq \alpha \leq 1.05$,
$0.5 \leq 1\text{-x-1-x2-y-z} \leq 0.95$,
$0 \leq x1 \leq 0.015$,
$0< x2 \leq 0.1$,
$0 < y \leq 0.1$,
$0 \leq z \leq 0.1$, and
$-0.05 \leq \beta \leq 0.05$, and
M is an element other than Li, Ni, Mn, Al, Co, and oxygen.

**3.** The non-aqueous electrolyte secondary battery according to claim 2, wherein the element M is at least one selected from the group consisting of Ti, Zr, Nb, Mo, W, Fe, Zn, B, Si, Mg, Ca, Sr, Sc, and Y.

**4.** The non-aqueous electrolyte secondary battery according to any one of claims 1 to 3, wherein the fluorosulfonic acid salt is at least one selected from the group consisting of $FSO_3Li$ and $FSO_3Na$.

**5.** The non-aqueous electrolyte secondary battery according to any one of claims 1 to 4, wherein a content of the fluorosulfonic acid salt in the non-aqueous electrolyte is 3 mass% or less.

**6.** The non-aqueous electrolyte secondary battery according to any one of claims 1 to 5, wherein the non-aqueous electrolyte further includes an isocyanuric acid ester component having at least one unsaturated organic group with an unsaturated carbon-carbon bond.

**7.** The non-aqueous electrolyte secondary battery according to claim 6, wherein in the non-aqueous electrolyte, a mass ratio of the isocyanuric acid ester component to the fluorosulfonic acid component is 0.5 to 1.5.

**8.** The non-aqueous electrolyte secondary battery according to claim 6 or 7, wherein the isocyanuric acid ester component includes at least one selected from the group consisting of triallyl isocyanurate and diallyl isocyanurate.

FIG. 1

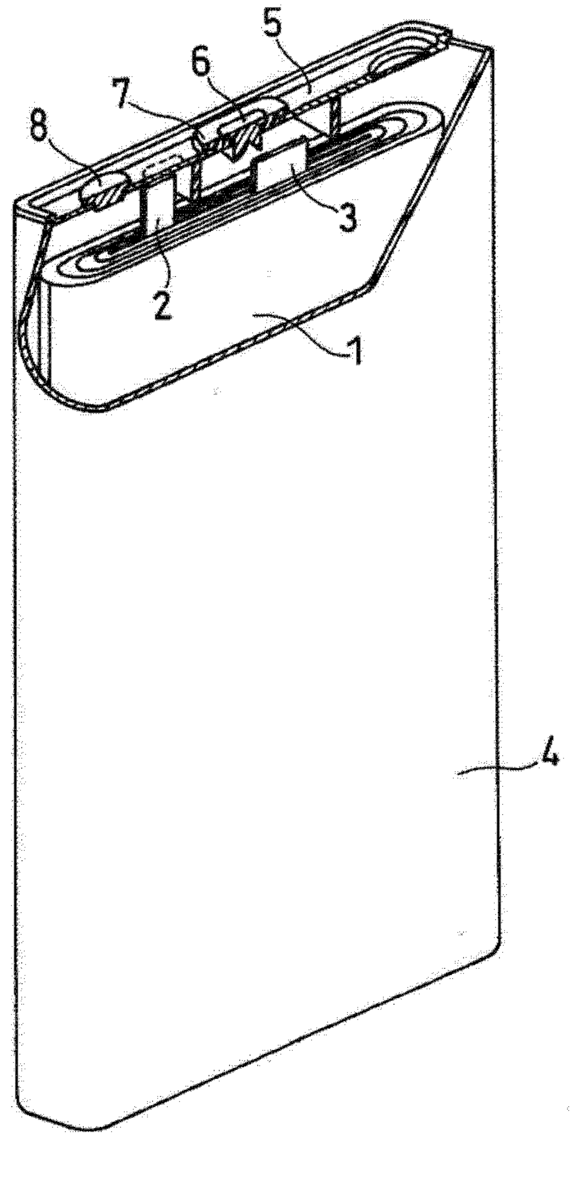

**INTERNATIONAL SEARCH REPORT**

International application No.
**PCT/JP2021/038948**

**A. CLASSIFICATION OF SUBJECT MATTER**

***H01M 4/505***(2010.01)i; ***H01M 4/525***(2010.01)i; ***H01M 10/052***(2010.01)i; ***H01M 10/0567***(2010.01)i
FI: H01M10/052; H01M4/505; H01M4/525; H01M10/0567

According to International Patent Classification (IPC) or to both national classification and IPC

**B. FIELDS SEARCHED**

Minimum documentation searched (classification system followed by classification symbols)

H01M10/052; H01M4/505; H01M4/525; H01M10/0567

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| Y | JP 2018-063942 A (MITSUBISHI CHEM CORP) 19 April 2018 (2018-04-19) claims, paragraphs [0049]-[0075], [0083]-[0085], [0148]-[0152] | 1-8 |
| Y | WO 2020/137816 A1 (SANYO ELECTRIC CO) 02 July 2020 (2020-07-02) paragraph [0008] | 1-8 |
| A | JP 2019-102451 A (CENTRAL GLASS CO LTD) 24 June 2019 (2019-06-24) | 1-8 |

☐ Further documents are listed in the continuation of Box C.

☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 November 2021** | **30 November 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2021/038948**

| Patent document cited in search report | Publication date (day/month/year) | Patent family member(s) | Publication date (day/month/year) |
|---|---|---|---|
| JP 2018-063942 A | 19 April 2018 | (Family: none) | |
| WO 2020/137816 A1 | 02 July 2020 | (Family: none) | |
| JP 2019-102451 A | 24 June 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014194930 A
- JP 2006310181 A